# FASCICULE DE BREVET EUROPEEN

(11) **EP 2 591 982 B1**
(45) Date de publication et mention de la délivrance du brevet: **25.03.2015**
(21) Numéro de dépôt: 12190860.2
(22) Date de dépôt: 31.10.2012
(51) Int. Cl.: B62D 6/10, B62D 5/04

(54) **Module d'assistance pour système de direction assistée de véhicule**
Hilfsmodul für ein Servolenkungssystem eines Fahrzeugs
Assistance module for a power steering system of a vehicle

(30) Priorité: 08.11.2011 FR 1160144
(43) Date de publication de la demande: 15.05.2013
(73) Titulaire: Jtekt Europe, 69540 Irigny (FR)
(72) Inventeur: Vidal, Patrick, 69270 Cailloux Sur Fontaines (FR)
(74) Mandataire: Chevalier, Renaud Philippe

(56) Documents cités:
- DE-A1- 1 525 041
- FR-A1- 2 920 390
- US-A1- 2002 029 923

## Description

La présente invention se rapporte, d'une manière générale, aux systèmes de direction assistée équipant les véhicules automobiles. Plus particulièrement, cette invention a pour objet un module d'assistance, c'est-à-dire un sous-ensemble du système de direction assistée dont le rôle est de transmettre un couple d'assistance à la colonne de direction ou au pignon de direction, tout en déterminant le couple au volant pour asservir le couple d'assistance au couple au volant. Un tel module d'assistance est notamment applicable à une direction assistée électrique, dans laquelle un moteur électrique fournit le couple d'assistance transmis par ce module.

Un module d'assistance, destiné à une direction assistée électrique, comprend un arbre d'entrée et un organe de sortie montés rotatifs sensiblement suivant un axe commun à l'intérieur d'un carter. L'arbre d'entrée est relié au volant de conduite du véhicule par l'intermédiaire de la colonne de direction, cet arbre d'entrée étant guidé en rotation dans le carter par un palier extérieur. L'organe de sortie est un arbre de sortie intermédiaire ou un pignon venant directement en prise avec la crémaillère de la direction, cet organe de sortie étant guidé en rotation dans le carter par au moins un autre palier. L'arbre d'entrée et l'organe de sortie sont liés par l'intermédiaire d'une barre de torsion, disposée axialement, à l'aide de laquelle le couple au volant peut être déterminé.

L'extrémité intérieure de l'arbre d'entrée est engagée dans un évidement central de l'organe de sortie, et se trouve aussi guidée en rotation relativement à cet organe de sortie par un palier intérieur, en particulier un palier lisse.

Le couple d'assistance est transmis à l'organe de sortie, depuis le moteur électrique d'assistance, par l'intermédiaire d'un réducteur à engrenages qui est notamment un réducteur à vis sans fin et roue tangente, la vis sans fin étant accouplée au moteur et la roue tangente étant solidaire en rotation de l'organe de sortie.

Un module d'assistance ainsi constitué est divulgué, par exemple, par le brevet français FR 2 920 390 au nom du Demandeur.

Un tel module d'assistance nécessite la présence d'un jeu entre l'arbre d'entrée et le palier intérieur de guidage de cet arbre relativement à l'organe de sortie, de manière à éviter les frottements entre ces deux éléments afin de pouvoir déterminer avec précision le couple au volant à l'aide de la barre de torsion. Toutefois, l'existence du jeu et les déplacements radiaux autorisés par ce jeu sont susceptibles, dans certaines conditions de roulage du véhicule, d'engendrer des bruits et vibrations parasites.

Afin de limiter de tels bruits et vibrations, tout en conservant des frottements négligeables entre l'arbre d'entrée et le palier intérieur, le document de brevet précité FR 2 920 390 propose déjà d'intercaler des moyens d'amortissement élastiques entre l'arbre d'entrée et le palier intérieur, ces moyens d'amortissement étant constitués par un joint élastique annulaire, en particulier un joint torique, monté dans une gorge annulaire ménagée sur l'arbre d'entrée ou sur le palier intérieur.

Une telle réalisation nécessite ainsi l'insertion d'un joint torique dans une gorge correspondante, donc l'ajout et le montage d'un élément supplémentaire. De plus, la gorge annulaire creusée dans l'arbre d'entrée ou dans le palier intérieur, pour loger et retenir le joint, est susceptible de fragiliser l'un ou l'autre de ces composants.

La présente invention vise à éliminer ces inconvénients, en fournissant une solution améliorée pour le guidage en rotation amorti à réaliser entre l'arbre d'entrée et l'organe de sortie du module d'assistance.

A cet effet, l'invention a pour objet un module d'assistance pour système de direction assistée de véhicule automobile, le module comprenant, au moins partiellement logés à l'intérieur d'un carter, un arbre d'entrée et un organe de sortie tel qu'un arbre de sortie ou un pignon, montés rotatifs sensiblement suivant un axe commun et liés par l'intermédiaire d'une barre de torsion disposée suivant ledit axe, l'arbre d'entrée étant guidé en rotation dans le carter par un palier extérieur, et étant guidé aussi en rotation relativement à l'organe de sortie par un palier intérieur, des moyens d'amortissement élastiques étant associés au palier intérieur, ce module d'assistance étant essentiellement caractérisé par le fait que lesdits moyens d'amortissement élastiques sont intégrés au palier intérieur.

Ainsi, l'idée inventive consiste à réaliser un palier avec fonction d'amortissement intégrée, permettant d'obtenir une réduction des frottements et des bruits de contact entre l'arbre d'entrée et l'organe de sortie, en rendant inutile l'ajout d'un joint annulaire et la réalisation d'une gorge pour le montage du joint.

Pour l'intégration de la fonction d'amortissement, le palier intérieur comporte avantageusement, dans sa structure, au moins une couche d'amortissement, notamment en élastomère.

Dans une forme de réalisation préférée de l'invention, le palier intérieur se compose de trois couches coaxiales, à savoir :
- la couche d'amortissement en élastomère, située le plus à l'extérieur donc du côté de l'organe de sortie ;
- une couche métallique telle qu'en acier, située en position intermédiaire, et
- une couche en matériau à faible coefficient de frottement, tel que polytétrafluoréthylène (PTFE), située le plus à l'intérieur donc du côté de l'arbre d'entrée.

La couche extérieure en élastomère réalise l'amortissement souhaité. La couche intermédiaire métallique confère au palier une tenue ou rigidité suffisante. La couche intérieure limite les frottements pour conserver une bonne précision de détermination du couple au volant.

De toute façon, l'invention sera bien comprise à l'aide de la description qui suit en référence au dessin schématique annexé représentant, à titre d'exemple non limitatif, une forme d'exécution de ce module d'assistance.
Figure 1 est une vue en coupe longitudinale d'un module d'assistance selon l'invention ;
Figure 2 représente, à échelle agrandie, un détail de la figure 1 ;
Figure 3 est une vue en perspective du palier intérieur seul ;
Figure 4 est une vue en section du palier intérieur.

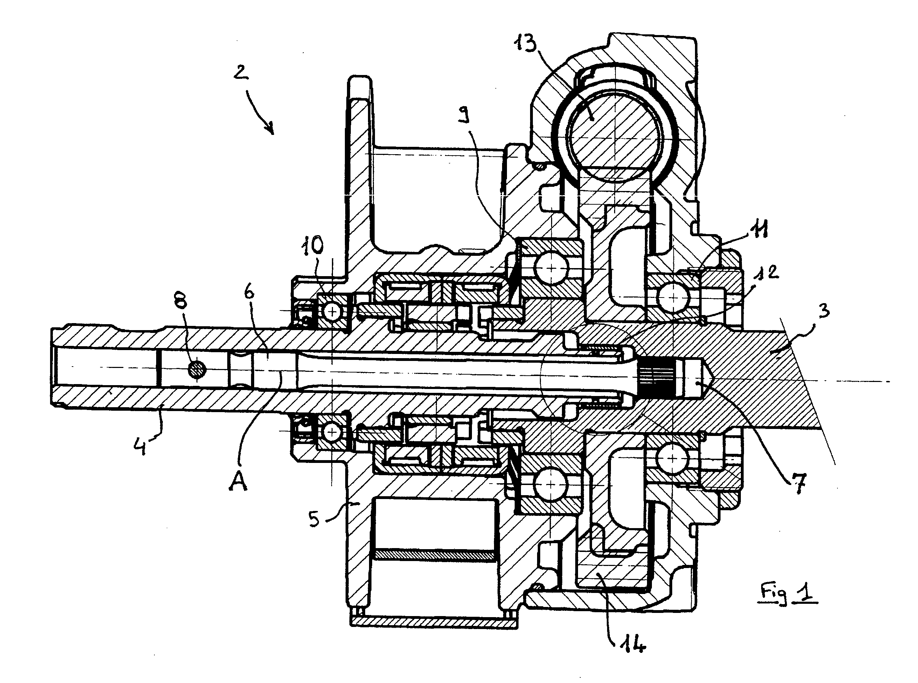

La figure 1 représente un module d'assistance, désigné dans son ensemble par le repère 2, qui appartient à un système de direction assistée électrique agissant sur le pignon de direction 3.

Le module d'assistance 2 comprend un arbre d'entrée 4 tubulaire, et un organe de sortie constitué ici par le pignon 3 lui-même, l'arbre d'entrée 4 et le pignon 3 étant montés rotatifs suivant un axe commun A dans un carter 5. En position montée, l'arbre d'entrée 4 est lié en rotation, par son extrémité éloignée du pignon 3, à la colonne de direction (non représentée) du véhicule concerné, tandis que le pignon 3 vient en prise avec la crémaillère (non représentée) de la direction.

L'arbre d'entrée 4 et le pignon 3 sont liés par l'intermédiaire d'une barre de torsion 6 disposée suivant l'axe A. Une extrémité de la barre de torsion 6 est encastrée au fond d'un évidement central 7 du pignon 3, tandis que l'autre extrémité de la barre de torsion 6 est liée en rotation, par une goupille 8, à la partie extérieure de l'arbre d'entrée 4.

Le pignon 3 est guidé en rotation dans le carter 5 par deux paliers à roulement 9 et 11, espacés axialement. L'arbre d'entrée 4 est guidé en rotation dans le carter 5 par un palier à roulement 10 extérieur ; cet arbre d'entrée 4 est aussi guidé en rotation relativement au pignon 3 par un palier lisse 12 intérieur, situé dans l'évidement central 7 du pignon 3.

S'agissant ici d'une direction assistée électrique, le carter 5 renferme encore un réducteur à vis sans fin 13 et roue tangente 14. La vis sans fin 13 est accouplée à l'arbre d'un moteur électrique d'assistance (non représenté), tandis que la roue tangente 14 est montée autour du pignon 3 et liée en rotation à ce dernier.

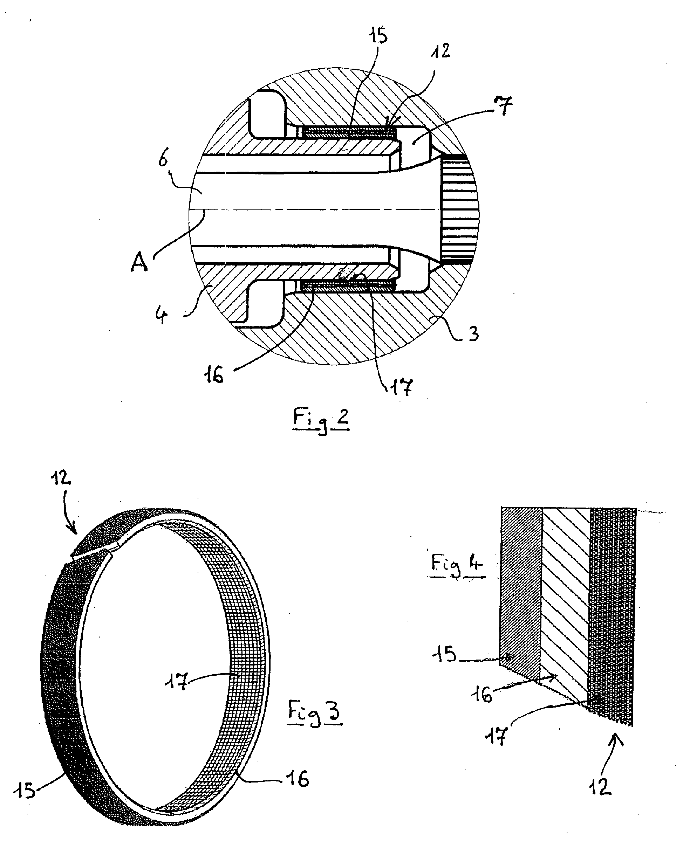

L'invention s'intéresse plus particulièrement à la structure du palier lisse 12 intérieur, représenté en détail sur les figures 2 à 4.

Le palier lisse 12, en forme de bande plate enroulée sur elle-même, se compose de trois couches superposées, désignées en fonction de leur position (par rapport à l'axe A) comme couche extérieure 15, couche intermédiaire 16 et couche intérieure 17.

La couche extérieure 15 est une couche en élastomère, à fonction d'amortissement, qui prend place face à la paroi de l'évidement central 7 du pignon 3.

La couche intermédiaire 16 est une couche en métal, en particulier une couche en acier.

La couche intérieure 17 est une couche en polytétrafluoréthylène (PTFE), présentant de bonnes qualités de glissement vis-à-vis de l'extrémité intérieure de l'arbre d'entrée 4 qu'elle entoure.

Ainsi, sans augmenter les frottements entre l'arbre d'entrée 4 et le palier lisse 12 intérieur, ce dernier réalise par sa couche extérieure 15 en élastomère une fonction d'amortissement entre l'arbre d'entrée 4 et le pignon 3, d'où une suppression des bruits de contact métalliques.

Comme il va de soi, l'invention ne se limite pas à la seule forme d'exécution de ce module d'assistance, décrite ci-dessus à titre d'exemple, elle en embrasse au contraire toutes les variantes de réalisation et d'application respectant le même principe. C'est ainsi notamment que les matières particulières indiquées sont remplaçables par toutes matières équivalentes. Dans le même ordre d'idées, le module d'assistance selon l'invention pourrait être utilisé pour tout type de direction assistée, que celle-ci soit électrique, hydraulique ou autre, en adaptant si nécessaire l'organe de sortie. En particulier, dans le cas d'une direction assistée électrique agissant sur la colonne de direction, l'organe de sortie ne serait pas un pignon mais un arbre de sortie du module d'assistance, accouplé à un arbre intermédiaire.

## Revendications

1. Module d'assistance pour système de direction assistée de véhicule automobile, le module (2) comprenant, au moins partiellement logés à l'intérieur d'un carter (5), un arbre d'entrée (4) et un organe de sortie tel qu'un arbre de sortie ou un pignon (3), montés rotatifs sensiblement suivant un axe commun (A) et liés par l'intermédiaire d'une barre de torsion (6) disposée suivant ledit axe (A), l'arbre d'entrée (4) étant guidé en rotation dans le carter (5) par un palier extérieur (10), et étant guidé aussi en rotation relativement à l'organe de sortie (3) par un palier intérieur (12), des moyens d'amortissement élastiques étant associés au palier intérieur (12), **caractérisé en ce que** lesdits moyens d'amortissement élastiques (15) sont intégrés au palier intérieur (12).

2. Module d'assistance selon la revendication 1, **caractérisé en ce que** le palier intérieur (12) comprend, dans sa structure, au moins une couche d'amortissement (15), notamment en élastomère.

3. Module d'assistance selon la revendication 2, **caractérisé en ce que** le palier intérieur (12) se compose de trois couches coaxiales, à savoir :
- la couche d'amortissement (15) en élastomère, située le plus à l'extérieur donc du côté de l'organe de sortie (3),
- une couche métallique (16) telle qu'en acier, située en position intermédiaire, et
- une couche en matériau à faible coefficient de frottement (17), tel que polytétrafluoréthylène (PTFE), située le plus à l'intérieur donc du côté de l'arbre d'entrée (4).

## Patentansprüche

1. Hilfsmodul für ein Servolenkungssystem eines Kraftfahrzeugs, wobei das Modul (2), mindestens teilweise im Inneren eines Gehäuses (5) aufgenommen, eine Eingangswelle (4) und ein Ausgangsorgan wie z.B. eine Ausgangswelle oder ein Ritzel (3) umfasst, die drehbar im Wesentlichen gemäß einer gemeinsamen Achse (A) montiert und mit Hilfe eines Drehstabs (6) verbunden sind, der gemäß der Achse (A) angeordnet ist, wobei die Eingangswelle (4) im Gehäuse (5) durch ein äußeres Lager (10) in Drehung versetzt und auch mit Bezug auf das Ausgangsorgan (3) durch ein inneres Lager (12) in Drehung versetzt wird, wobei elastische Dämpfungsmittel mit dem inneren Lager (12) assoziiert sind, **dadurch gekennzeichnet, dass** die elastischen Dämpfungsmittel (15) in das innere Lager (12) integriert sind.

2. Hilfsmodul nach Anspruch 1, **dadurch gekennzeichnet, dass** das innere Lager (12) in seiner Struktur mindestens eine Dämpfungsschicht (15) umfasst, insbesondere aus Elastomer.

3. Hilfsmodul nach Anspruch 2, **dadurch gekennzeichnet, dass** das innere Lager (12) aus drei koaxialen Schichten besteht, d.h.:
- der Dämpfungsschicht (15) aus Elastomer, die sich am weitesten außen, somit an der Seite des Ausgangsorgans (3) befindet,
- einer Metallschicht (16) wie z.B. aus Stahl, die sich in einer Zwischenposition befindet, und
- einer Schicht aus einem Material mit einem niedrigen Reibungskoeffizienten (17) wie z.B. Polytetrafluorethylen (PTFE), die sich am weitesten innen, somit an der Seite der Eingangswelle (4) befindet.

## Claims

1. An assistance module for assisted steering system of motor vehicle, the module (2) comprising, at least partially housed inside a casing (5), an inlet shaft (4) and an outlet member such as an outlet shaft or a pinion (3), rotatably mounted substantially along a common axis (A) and connected by means of a torsion bar (6) disposed along said axis (A), the inlet shaft (4) being guided in rotation in the casing (5) by an external bearing (10), and being also guided in rotation relatively to the outlet member (3) by an internal bearing (12), elastic damping means being associated to the internal bearing (12), **characterized in that** said elastic damping means (15) are integrated to the internal bearing (12).

2. The assistance module according to claim 1, **characterized in that** the internal bearing (12) comprises, in its structure, at least one damping layer (15), in particular in elastomer.

3. The assistance module according to claim 2, **characterized in that** the internal bearing (12) is composed of three coaxial layers, namely:
- the damping layer (15) in elastomer, located the most outwardly hence on the side of the outlet member (3),
- a metal layer (16) such as in steel, located in intermediate position, and
- a layer in a material of low friction coefficient (17), such as polytetrafluoroethylene (PTFE), located the most inwardly hence on the side of the inlet shaft (4).
